# EUROPEAN PATENT SPECIFICATION

(11) **EP 3 957 878 B1**
(45) Date of publication and mention of the grant of the patent: **19.04.2023**
(21) Application number: 21187903.6
(22) Date of filing: 27.07.2021
(51) Int. Cl.: F16H 25/22, F16H 25/24

(54) **NUT AND BALL SCREW DEVICE**
MUTTER- UND KUGELSPINDELVORRICHTUNG
DISPOSITIF À ÉCROU ET VIS À BILLES

(30) Priority: 21.08.2020 CN 202021759935 U
(43) Date of publication of application: 23.02.2022
(73) Proprietor: Lee, Szu-Ying, New Taipei City 220 (TW)
(72) Inventor: Lee, Szu-Ying, New Taipei City 220 (TW)
(74) Representative: Viering, Jentschura & Partner mbB Patent- und Rechtsanwälte

(56) References cited:
- CN-U- 202 418 465
- CN-U- 203 322 188
- US-A- 6 112 610

## Description

### BACKGROUND

### Technical Field

The present invention relates to a nut and a ball screw device, and in particular, to a nut that can avoid radial displacement of a circulator and a ball screw device using the same.

### Related Art

In a ball screw structure, an internal circulator is arranged on an inner side of a nut to enable a ball to circulate in the nut. There are various methods to arrange the internal circulator. For example, a radial perforation is provided on the nut wall, and the internal circulator is disposed in the perforation and then fastened through locking or clamping. Alternatively, the internal circulator is disposed in a long straight groove arranged in an inner wall of the nut, and then fastened through locking with bolts or screws or fastened through adhesive dispensing.

However, methods of fastening with bolts, screws, perforations or adhesive dispensing may still lead to slight radial movements of the assembled internal circulator, thereby causing unsmooth operation. Moreover, most of such internal circulation nuts are small. In the case of a small nut size, screws, bolts and perforations need to be smaller, so that the circulator can be arranged in the nut, which makes the assembling much more difficult.

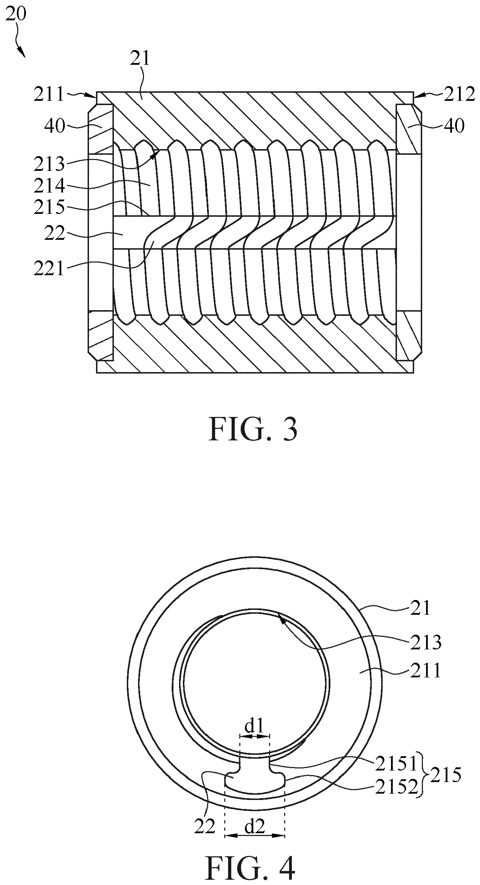

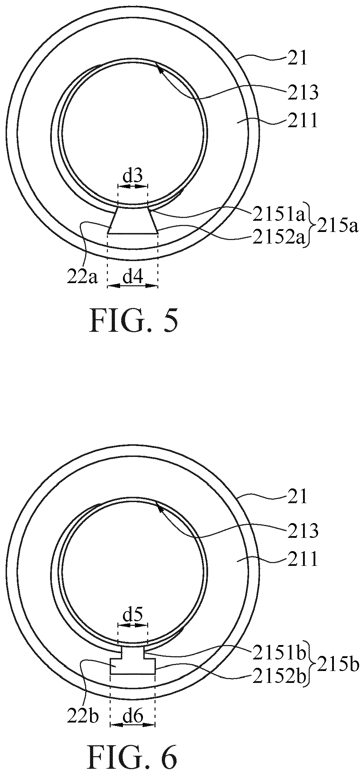

US 6 112 610 shows a nut (Fig. 3), the nut comprising: a nut body (10), comprising an inner ring wall (11), a ball groove (11a) and an assembly groove (31), wherein the ball groove is annularly arranged in the inner ring wall, the assembly groove is axially arranged in the inner ring wall and viewed from an axial end of the nut body, a shape of the assembly groove comprises a narrow neck (portion in the area of ref. sign 31) and a wide neck (portion in the area of 30, 32) along a radial cross section of the nut body, the narrow neck having a smaller width than that of the wide neck and the narrow neck is closer to the inner ring wall than the wide neck; and a circulator (26, 34, 35, 38, 37), arranged in the assembly groove of the nut body, wherein a shape of the circulator corresponds to the shape of the assembly groove, the circulator is provided with a guiding groove (see guiding grooves in Fig. 6) facing the inner ring wall, and the guiding groove and the ball groove form a ball circulating channel (26, Fig. 5).

### SUMMARY

According to the present invention, a nut as defined in claim 1 is provided. The dependent claims show some examples thereof.

In some embodiments, the circulator may be fixedly arranged in the assembly groove of the nut body through glue.

To sum up, in the nut and the ball screw device of the present invention, the assembly groove with the narrow neck near the inner ring wall and the circulator with the shape of the cross section corresponding to that of the assembly groove are used. When the circulator is arranged in the assembly groove under the limit of the narrow neck, radial displacement of the circulator towards the inner ring wall of the nut body can be avoided. During mounting of the circulator, the circulator simply needs to be inserted into the assembly groove along the axial direction of the nut body to complete the assembly. In this way, the circulator can be prevented from radially falling off without using additional components such as screws or bolts for locking. Moreover, any slight radial movement of the circulator may be further prevented. Further, it is easier to assemble the circulator in the small nut.

The detailed features and advantages of the present invention are described below in great detail through the following embodiments, and the content of the detailed description is sufficient for persons skilled in the art to understand the technical content of the present invention and to implement the present invention accordingly. Based upon the content of the specification, the claims, and the drawings, persons skilled in the art can easily understand the relevant objectives and advantages of the present invention.

### BRIEF DESCRIPTION OF THE DRAWINGS

FIG. 1 is a three-dimensional view of a ball screw device according to a first embodiment of the present invention;
FIG. 2 is an exploded view of the ball screw device according to the first embodiment of the present invention;
FIG. 3 is an axial cross-sectional view of a nut, taken along 3-3 shown in FIG. 2, according to the first embodiment of the present invention;
FIG. 4 is a view from an axial end of the nut according to the first embodiment of the present invention;
FIG. 5 is a view from an axial end of a nut according to a second embodiment of the present invention; and
FIG. 6 is a view from an axial end of a nut according to a third embodiment of the present invention.

### DETAILED DESCRIPTION

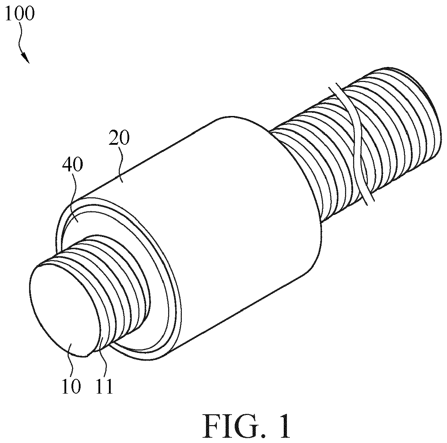

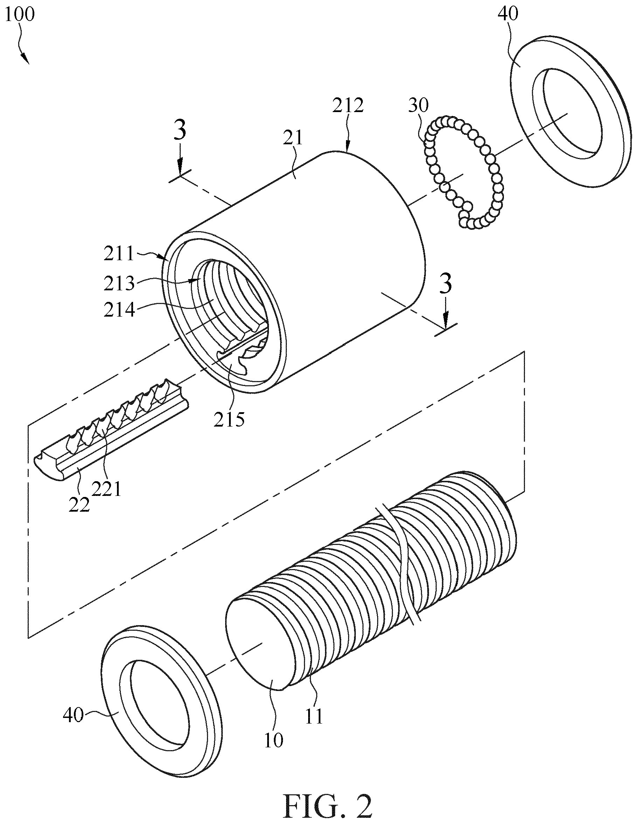

Refer to FIG. 1 to FIG. 4. FIG. 1 is a three-dimensional view of a ball screw device according to a first embodiment of the present invention. FIG. 2 is an exploded view of the ball screw device according to the first embodiment of the present invention. FIG. 3 is an axial cross-sectional view of a nut, taken along 3-3 shown in FIG. 2, according to the first embodiment of the present invention. FIG. 4 is a view from an axial end of the nut according to the first embodiment of the present invention. As shown in FIG. 1 and FIG. 2, a ball screw device 100 of this embodiment includes a screw 10, a nut 20, and a plurality of balls 30. In FIG. 2, only a single group of balls 30 is drawn as an example. As shown in FIG. 1, the screw 10 includes a track groove 11. The nut 20 is slidably arranged on the screw 10. The track groove 11 and a ball circulating channel (described later in detail) form a ball circulating passage, in which the balls 30 roll. In other embodiments, the screw 10 may be a round rod with a smooth surface and is not necessarily provided with the track groove 11.

As shown in FIG.2 and FIG. 3, the nut 20 includes a nut body 21 and a circulator 22. Two axial ends of the nut body 21 are a first end 211 and a second end 212 respectively. The nut body 21 includes an inner ring wall 213, a ball groove 214 and an assembly groove 215. The ball groove 214 is annularly arranged in the inner ring wall 213. As shown in FIG. 2 and FIG. 3, an assembly groove 215 is axially arranged in the inner ring wall 213 and runs through the two axial ends of the nut body 21, that is, the assembly groove 215 runs through the first end 211 and the second end 212 of the nut body 21.

As shown in FIG. 2 and FIG. 4, viewed from an axial end of the nut body 21 (viewed from the first end 211 in FIG. 4), a shape of the assembly groove 215 includes a narrow neck 2151 and a wide neck 2152 along a radial cross section of the nut body 21. The narrow neck 2151 has a smaller width than that of the wide neck 2152. In detail, as shown in FIG. 4, viewed from the first end 211 of the nut body 21, the assembly groove 215 is slightly bottle-shaped, and includes the narrow neck 2151 and the wide neck 2152. The narrow neck 2151 is closer to the inner ring wall 213 than the wide neck 2152. The narrow neck 2151 has a width d1, which may be a smallest width of the entire narrow neck 2151 or an opening width of the narrow neck 2151 at the inner ring wall 213. The wide neck 2152 has a width d2, which may be a largest width of the entire wide neck 2152. The width d1 of the narrow neck 2151 is smaller than the width d2 of the wide neck 2152.

Referring to FIG. 2 to FIG. 4, the circulator 22 is arranged in the assembly groove 215 of the nut body 21, and the shape of the circulator 22 corresponds to that of the assembly groove 215. As shown in FIG. 2, the circulator 22 is in the shape of a long strip, and corresponding to the shape of the assembly groove 215 shown in FIG. 4, the cross section of the circulator 22 is also bottle-shaped. In other words, viewed from the first end 211, the shape of the circulator 22 corresponds to that of the assembly groove 215, so that the circulator 22 can be smoothly inserted into the assembly groove 215. Radial movement of the circulator 22 along the nut body 21 can be avoided under the limit of the assembly groove 215, thereby preventing the circulator 22 from falling off the assembly groove 215.

As shown in FIG. 2 and FIG. 3, the circulator 22 is provided with a guiding groove 221 facing the inner ring wall 213. The guiding groove 221 and the ball groove 214 form a ball circulating channel. When the nut 20 is slidably arranged on the screw 10, the ball circulating channel and the track groove 11 form a ball circulating passage, so that the balls 30 roll in the ball circulating passage.

By using the assembly groove 215 with the narrow neck 2151 near the inner ring wall 213 and the circulator 22 with the shape of the cross section corresponding to that of the assembly groove 215, when the circulator 22 is arranged in the assembly groove 215 under the limit of the narrow neck 2151, radial displacement of the circulator 22 towards the inner ring wall 213 of the nut body 21 can be avoided. During mounting of the circulator 22, the circulator 22 simply needs to be inserted into the assembly groove 215 along the axial direction of the nut body 21 to complete the assembly. In this way, the circulator 22 can be prevented from radially falling off without using additional components such as screws or bolts for locking. Moreover, any slight radial movement of the circulator 22 may be further prevented. Further, it is easier to assemble the circulator 22 in the small nut 20.

Referring to FIG. 1 to FIG. 3, the circulator 22 can be fixedly arranged in the assembly groove 215 of the nut body 21 through fixing means. In this embodiment, the fixing means includes arranging two end caps 40 on the two ends of the nut body 21. That is, an end cap 40 is arranged on the first end 211, and an end cap 40 is arranged on the second end 212. The two ends of the assembly groove 215 are limited by the two end caps, to prevent axial displacement of the circulator 22. Moreover, although this embodiment is illustrated with two end caps 40 as an example, in other embodiments, only one end cap 40 may be arranged, and a stopper or no component may be arranged on the other end.

Further, in some embodiments, instead of using the end caps 40, the fixing means may be adhering the circulator 22 to the assembly groove 215 of the nut body 21 through glue. The fixing means of using glue has a better effect of fixing the circulator 22 and avoids slight axial displacement of the circulator 22. In some embodiments, the end cap 40 and glue may also be used in combination.

Refer to FIG. 5. FIG. 5 is a view from an axial end of a nut according to a second embodiment of the present invention. In this embodiment, components that are identical to those of the first embodiment are denoted by the same symbols and will not be described in detail again. The difference between this embodiment and the first embodiment lies in the shape of the assembly groove and the radial cross section of the circulator. In this embodiment, as shown in FIG. 5, viewed from an axial end of the nut body 21 (viewed from the first end 211 in FIG. 5), a shape of an assembly groove 215a also includes a narrow neck 2151a and a wide neck 2152a along the radial cross section of the nut body 21. The narrow neck 2151a has a smaller width than that of the wide neck 2152a. In detail, as shown in FIG. 5, viewed from the first end 211 of the nut body 21, the assembly groove 215a is slightly dovetail-shaped, and includes the narrow neck 2151a and the wide neck 2152a. The narrow neck 2151a is closer to the inner ring wall 213 than the wide neck 2152a. The narrow neck 2151a has a width d3, which is a smallest width of the entire narrow neck 2151a, and also an opening width the narrow neck 2151a at the inner ring wall 213. The wide neck 2152a has a width d4, which is a largest width of the entire wide neck 2152a. The width d3 of the narrow neck 2151a is smaller than the width d4 of the wide neck 2152a.

A circulator 22a is arranged in the assembly groove 215a of the nut body 21, and the shape of the circulator 22 corresponds to that of the assembly groove 215. As shown in FIG. 5, viewed from the first end 211, corresponding to the shape of the assembly groove 215a, the circulator 22a is also dovetail-shaped. In other words, viewed from the first end 211, the shape of the circulator 22a corresponds to that of the assembly groove 215a, so that the circulator 22a can be smoothly inserted into the assembly groove 215a. Radial movement of the circulator 22a can be avoided under the limit of the assembly groove 215a, thereby preventing the circulator 22a from falling off the assembly groove 215a.

Refer to FIG. 6. FIG. 6 is a view from an axial end of a nut according to a third embodiment of the present invention. In this embodiment, components that are identical to those of the first embodiment are denoted by the same symbols and will not be described in detail again. The difference between this embodiment and the first embodiment lies in the shape of the assembly groove and the radial cross section of the circulator. In this embodiment, as shown in FIG. 6, viewed from an axial end of the nut body 21 (viewed from the first end 211 in FIG. 6), a shape of an assembly groove 215b also includes a narrow neck 2151b and a wide neck 2152b along a radial cross section of the nut body 21. The narrow neck 2151b has a smaller width than that of the wide neck 2152b. In detail, as shown in FIG. 6, viewed from the first end 211 of the nut body 21, the assembly groove 215b is slightly inverted T-shaped, and includes the narrow neck 2151b and the wide neck 2152b. The narrow neck 2151b is closer to the inner ring wall 213 than the wide neck 2152b. The narrow neck 2151b has a width d5, which is a smallest width of the entire narrow neck 2151b, and also an opening width of the narrow neck 2151b at the inner ring wall 213. The wide neck 2152b has a width d6, which is a largest width of the entire wide neck 2152b. The width d5 of the narrow neck 2151b is smaller than the width d6 of the wide neck 2152b.

The circulator 22b is arranged in the assembly groove 215b of the nut body 21, and the shape of the circulator 22b corresponds to that of the assembly groove 215b. As shown in FIG. 6, viewed from the first end 211, corresponding to the shape of the assembly groove 215b, the circulator 22b is also inverted T-shaped. In other words, viewed from the first end 211, the shape of the circulator 22b corresponds to the shape of the assembly groove 215b, so that the circulator 22b can be smoothly inserted into the assembly groove 215b. Radial movement of the circulator 22b along the nut body 21 can be avoided under the limit of the assembly groove 215b, thereby preventing the circulator 22b from falling off the assembly groove 215b.

## Claims

1. A nut (20) comprising:
a nut body (21), comprising an inner ring wall (213), a ball groove (214) and an assembly groove (215, 215a, ), wherein the ball groove (214) is annularly arranged in the inner ring wall (213), the assembly groove (215, 215a) is axially arranged in the inner ring wall (213) and runs through two axial ends (211, 212) of the nut body (21), and viewed from an axial end (211, 212) of the nut body (21), a shape of the assembly groove (215, 215a) comprises a narrow neck (2151, 2151a) and a wide neck (2152, 2152a) along a radial cross section of the nut body (21), the narrow neck (2151, 2151a) having a smaller width than that of the wide neck (2152, 2152a) and the narrow neck (2151, 2151a) is closer to the inner ring (213) wall than the wide neck (2152, 2152a); and
a circulator (22, 22a), arranged in the assembly groove (215) of the nut body (21),
wherein a shape of the circulator (22, 22a) corresponds to the shape of the assembly groove (215), the circulator (22, 22a) is provided with a guiding groove (221) facing the inner ring wall (213), and the guiding groove (221) and the ball groove (214) form a ball circulating channel, wherein a radial cross section of the circulator (22, 22a) is bottle-shaped or dovetail-shaped.

2. The nut according to claim 1, wherein the circulator (22, 22a) is fixedly arranged in the assembly groove (215, 215a) of the nut body (21) through glue.

3. A ball screw device (100), comprising:
a screw (10), comprising a track groove (11);
the nut (20) according to any of claims 1 and 2, slidably arranged on the screw (10); and
a plurality of balls (30), rolling in the ball circulating passage.

4. The ball screw device according to claim 3, wherein the circulator (22, 22a) is fixedly arranged in the assembly groove (215, 215a) of the nut body (21) through glue.

## Patentansprüche

1. Mutter (20), aufweisend:
einen Mutterkörper (21), welcher eine innere Ringwand (213), eine Kugelrille (214) und eine Montagenut (215, 215a) aufweist, wobei die Kugelrille (214) ringförmig in der inneren Ringwand (213) angeordnet ist, die Montagenut (215, 215a) axial in der inneren Ringwand (213) angeordnet ist und durch zwei axiale Enden (211, 212) des Mutterkörpers (21) hindurch verläuft, und, von einem axialen Ende (211, 212) des Mutterkörpers (21) aus gesehen, eine Form der Montagenut (215, 215a) einen schmalen Hals (2151, 2151a) und einen breiten Hals (2152, 2152a) entlang eines radialen Querschnitts des Mutterkörpers (21) aufweist, wobei der schmale Hals (2151, 2151a) eine geringere Breite als jene des breiten Halses (2152, 2152a) aufweist und der schmale Hals (2151, 2151a) sich näher an der inneren Ringwand (213) befindet als der breite Hals (2152, 2152a), und
eine Umlaufvorrichtung (22, 22a), welche in der Montagenut (215) des Mutterkörpers (21) angeordnet ist, wobei eine Form der Umlaufvorrichtung (22, 22a) mit der Form der Montagenut (215) korrespondiert, wobei die Umlaufvorrichtung (22, 22a) mit einer Führungsnut (221) versehen ist, welche der inneren Ringwand (213) zugewandt ist, und wobei die Führungsnut (221) und die Kugelrille (214) einen Kugelumlaufkanal bilden, wobei ein radialer Querschnitt der Umlaufvorrichtung (22, 22a) flaschenförmig oder schwalbenschwanzförmig ist.

2. Mutter gemäß Anspruch 1, wobei die Umlaufvorrichtung (22, 22a) in der Montagenut (215, 215a) des Mutterkörpers (21) mittels Klebstoffs fest angeordnet ist.

3. Kugelgewindetrieb (100), aufweisend:
eine Schraube (10), welche eine Laufrille (11) aufweist,
die Mutter (20) gemäß einem der Ansprüche 1 und 2, welche verschiebbar an der Schraube (10) angeordnet ist, und
eine Vielzahl von Kugeln (30), welche in dem Kugelumlaufkanal rollen.

4. Kugelgewindetrieb gemäß Anspruch 3, wobei die Umlaufvorrichtung (22, 22a) in der Montagenut (215, 215a) des Mutterkörpers (21) mittels Klebstoffs fest angeordnet ist.

## Revendications

1. Écrou (20), comprenant :
un corps d'écrou (21), comprenant une paroi annulaire interne (213), une gorge à billes (214) et une rainure d'assemblage (215, 215a), dans lequel la gorge à billes (214) est agencée de manière annulaire dans la paroi annulaire interne (213), la rainure d'assemblage (215, 215a) est agencée de manière axiale dans la paroi annulaire interne (213) et s'étend à travers deux extrémités axiales (211, 212) du corps d'écrou (21), et vue depuis une extrémité axiale (211, 212) du corps d'écrou (21), une forme de la rainure d'assemblage (215, 215a) comprend un col étroit (2151, 2151a) et un col large (2152, 2152a) le long d'une section transversale radiale du corps d'écrou (21), le col étroit (2151, 2151a) ayant une largeur plus petite que celle du col large (2152, 2152a) et le col étroit (2151, 2151a) est plus proche de la paroi de la bague interne (213) que le col large (2152, 2152a) ; et
un circulateur (22, 22a), agencé dans la rainure d'assemblage (215) du corps d'écrou (21), dans lequel une forme du circulateur (22, 22a) correspond à la forme de la rainure d'assemblage (215), le circulateur (22, 22a) est pourvu d'une rainure de guidage (221) tournée vers la paroi annulaire interne (213), et la rainure de guidage (221) et la gorge à billes (214) forment un canal de circulation de billes, dans lequel une section transversale radiale du circulateur (22, 22a) est en forme de bouteille ou de queue d'aronde.

2. Écrou selon la revendication 1, dans lequel le circulateur (22, 22a) est agencé de manière fixe dans la rainure d'assemblage (215, 215a) du corps de l'écrou (21) par collage.

3. Dispositif de vis à billes (100), comprenant :
une vis (10), comprenant une rainure de guidage (11) ;
l'écrou (20) selon l'une quelconque des revendications 1 et 2, disposé de manière coulissante sur la vis (10) ; et
une pluralité de billes (30), roulant dans le passage de circulation des billes.

4. Dispositif de vis à billes selon la revendication 3, dans lequel le circulateur (22, 22a) est agencé de manière fixe dans la rainure d'assemblage (215, 215a) du corps d'écrou (21) par collage.
